# EUROPÄISCHE PATENTSCHRIFT

(11) **EP 0 415 907 B1**
(45) Veröffentlichungstag und Bekanntmachung des Hinweises auf die Patenterteilung: **01.06.1994**
(21) Anmeldenummer: 90890243.0
(22) Anmeldetag: 13.08.1990
(51) Int. Cl.: A01B 15/14

(54) **An einem Ackerschlepper anbaubarer, quer zur Fahrtrichtung parallel zur Bodenoberfläche verstellbarer Pflug**
Tractor mountable plough, perpendicularly adjustable to the direction of travel and parallel to the ground
Charrue portée réglable perpendiculaire à la direction d'avance et parallèle au sol

(30) Priorität: 22.08.1989 AT 1984/89
(43) Veröffentlichungstag der Anmeldung: 06.03.1991
(73) Patentinhaber: F. & C. BERGER, A-4800 Attnang-Puchheim (AT)
(72) Erfinder: Hochreiter, Walter, A-4693 Desselbrunn (AT); Berger, Christian, A-4650 Lambach (AT)
(74) Vertreter: Itze, Peter, Dipl.-Ing.

(56) Entgegenhaltungen:
- EP-A- 0 062 734
- EP-A- 0 082 207
- EP-A- 0 316 825
- DE-A- 3 523 563
- FR-A- 2 201 022

## Beschreibung

Die Erfindung bezieht sich auf einen an einem Ackerschlepper anbaubaren, quer zur Fahrtrichtung parallel zur Bodenoberfläche verstellbaren Pflug, bei welchem die Verbindung zwischen Pflugrahmen und dem an der Koppel befestigten, feststehenden Pflugträger an einer quer zur Fahrtrichtung am Pflugträger horizontal verschiebbaren Führung angeordnet ist und sich in wenigstens einer Arbeitsstellung im Bereich der Spur hinter einem der Schlepperräder befindet, wobei der äußerste Pflugkörper außerhalb der Schlepperspur zu liegen kommt.

Beim Pflügen eines Feldes wird in der Regel so vorgegangen, daß der Ackerschlepper mit seinem auf einer Seite befindlichen Räderpaar in der letzten Furche des letzten Ackerganges fährt, wonach dann der Pflug mit der ersten Schar in diese Furche die Scholle wendet. Dadurch ergibt sich aufgrund der Begrenzung der Breite der Auflagefläche der Antriebsräder der Ackerschlepper, daß bei den heutigen, schweren Ackerschleppern eine hohe Bodenverdichtung unterhalb der gewendeten Scholle vorliegt. Es ist daher notwendig, von Zeit zu Zeit eine Tiefenlockerung des Bodens vorzunehmen, was aber den Nachteil hat, daß Bodenbakterien der oberen Bodenschichten in tiefere Bodenschichten gelangen und dort absterben, wogegen die von unten nach oben beförderten tiefen Bodenschichten mit Bodenbakterien nicht angereichert sind, so daß hier die volle Ausnutzbarkeit des Bodens erst nach einiger Zeit, also wenn sich eine entsprechende Bodenpopulation gebildet hat, vorliegt.

Aus den vorstehend genannten Gründen geht man nun bereits darauf über, die Pflüge seitlich zum Ackerschlepper so weit zu versetzen, daß der Ackerschlepper mit allen Rädern auf noch ungepflügtem Boden fährt, da dadurch einerseits die durch die Schlepperräder verdichteten Bodenbereiche nachfolgend gewendet werden und anderseits auch breitere Reifen verwendet werden können, da die Reifenbreite durch die gezogene Ackerfurche nicht begrenzt ist. Bei diesen bekannten Ausbildungen, so wie in EP-A- 82 207 beschrieben, tritt jedoch der Effekt auf, daß sich aufgrund der einseitigen Anordnung des Pfluges der Ackerschlepper nur sehr schwierig durch Gegenlenken in gerader Richtung fortbewegen läßt, was insbesondere auf rutschigem oder schlecht griffigem Boden äußerst schwierig ist.

Der Erfindung liegt die Aufgabe zugrunde, einen Anbaupflug der eingangs genannten Art zu schaffen, mit welchem auch bei voller seitlicher Versetzung des Pfluges in bezug auf den Ackerschlepper ein gerades Fahren mit demselben ermöglicht ist.

Erfindungsgemäß wird diese Aufgabe dadurch gelöst, daß an dem der Verbindung zwischen Pflugrahmen und der am Pflugträger horizontal verschiebaren Führung gegenüberliegenden, vorzugsweise etwa im Bereich hinter dem anderen Schlepperrad befindlichen, Endbereich des an der Koppel des Ackerschleppers angebrachten, feststehenden Pflugträgers ein Zugorgan angreift, das mit dem Pflugrahmen hinter der Verbindung desselben mit dem Pflugträger angelenkt ist. Dadurch wird erreicht, daß die vom Pflug auf den Ackerschlepper eingebrachten Zugkräfte auf beide Seiten des Ackerschleppers verteilt werden, da durch das Zugorgan ein Teil der Zugkräfte auf den auf der anderen Seite des Ackerschleppers liegenden Endbereich des Pflugträgers übertragen werden. Dadurch ist es auch bei ungünstigen Bodenverhältnissen, also bei nassem oder sonstwie schlecht griffigem Boden möglich, bei seitlich voll versetztem Pflug mit dem Ackerschlepper ohne Schwierigkeit geradeaus zu fahren.

Bei einer besonders vorteilhaften Ausführung kann das Zugorgan teleskopartig verkürz- bzw. verlängerbar sein, wobei ein, bei seitlich voll versetztem Pflug das weitere Verlängern begrenzender, Anschlag vorgesehen ist. Dadurch ist es möglich, den Pflugträger in bezug auf die Koppel des Ackerschleppers seitlich zu versetzen, ohne daß das Zugorgan der Versetzung im Wege steht. Es hat sich nämlich gezeigt, daß das Zugorgan lediglich bei voll versetztem Pflug seine volle Wirksamkeit haben muß, da die Zugkräfte, hinsichtlich ihrer Asymmetrie, immer geringer werden, je weiter der Pflug zum Mittelbereich des Ackerschleppers hineinversetzt wird. Bei in der Mitte befindlichem Pflug braucht das Zugorgan überhaupt nicht wirksam zu sein.

Vorteilhafterweise kann schließlich zwischen den zueinander teleskopartig verstellbaren Teilen des Zugorganes eine sich beim Verlängern desselben spannende Feder zwischengeschaltet sein. Dadurch werden die beim seitlichen Versetzen des Pfluges auftretenden Längenänderungen des Zugorganes kontinuierlich dahingehend ausgeglichen, daß die Zugkraft langsam abnimmt, und zwar in dem Maße, wie der Pflug gegen die Fahrzeugmitte hin versetzt wird. Außerdem ermöglicht eine solche Ausbildung, daß ein erfindungsgemäßes Zugorgan auch bei Pflügen eingesetzt wird, deren Arbeitsbreite durch Verschwenken des Pflugrahmens in bezug auf den Pflugträger erfolgt, wobei sich die Pflugkörper entsprechend der Schwenkung des Pflugrahmens einstellen. Derartige Pflüge sind bereits Stand der Technik.

In der Zeichnung ist ein Ausführungsbeispiel des Erfindungsgegenstandes dargestellt.

Fig. 1 zeigt in Draufsicht den erfindungsgemäßen Pflug in seitlich voll ausgefahrener Stellung.

Fig. 2 gibt eine analoge Darstellung des erfindungsgemäßen Pfluges, jedoch in voll eingefahrener Stellung, wieder. Bei beiden Ausführungsbeispielen sind zwei Stellungen eingezeichnet, und zwar eine Stellung bei geringerer Arbeitsbreite (voll ausgezogene Linien) und eine Stellung bei vergrößerter Arbeitsbreite (strichlierte Linien).

An der Koppel 1 eines Ackerschleppers ist ein Pflugträger 2 angebracht, welcher etwa parallel zur Bodenoberfläche und quer zur Fahrtrichtung des Ackerschleppers verläuft. Am Pflugträger 2 ist ein Pflugrahmen 3 bei 4 schwenkbar angelenkt, wobei diese Anlenkung 4 über eine Führung 5 entlang des Pflugträgers 2 verstellbar ist. Die Verstellung der Führung 5 entlang des Pflugträgers 2 erfolgt vorliegend mittels hydraulischer Kolben-Zylinder-Einheiten 6.

Am Pflugrahmen 3 sind Pflugkörper angebracht, welche aus einer Pflugschar 8 und einem Stützteil 9 bestehen, wobei der Stützteil 9 dazu dient, daß sich dieser an der Innenwandung der frisch gezogenen Furche abstützt, um so das seitliche Moment, das durch die Pflugscharen 8 ausgeübt wird, zu kompensieren.

Der Pflugrahmen 3 ist mit einer Zugstange 10 gelenkig verbunden, welche vom Pflugrahmen 3 weg zu dem seitlich voll ausgefahrenen Pflug der Führung 5 gegenüberliegenden Ende 11 des Pflugträgers 2 führt. Die Zugstange 10 ist vorliegend als Teleskopstange ausgebildet, wobei die beiden zueinander verschiebbaren Teile 10′ und 10˝ durch eine Feder 12 belastet sind, und zwar dahingehend, daß die Feder beim Verlängern der Teleskopstange gespannt wird.

Wie aus beiden Figuren ersichtlich, ist der Pflugrahmen 3 um die Anlenkung 4 in bezug auf den Pflugrahmen 2 verschwenkbar, und zwar um die Arbeitsbreite des Pfluges zu verändern. Um ein gleichmäßiges Verstellen der Pflugkörper 7 in bezug auf die Fahrtrichtung zu erzielen, bildet die Anlenkung 4 den Drehpunkt eines Gelenksparallelogrammes, welches durch eine von der Anlenkung zum Pflugrahmen führende Lasche 13 und einen parallel zu dieser verlaufenden Hebel 14 gebildet ist. Die Koppeln dieser beiden Gelenkshebeln bilden einerseits die Führung 5 und andererseits die Anlenkung des mittleren Pflugkörpers 7, welcher mit den übrigen Pflugkörpern über Verbindungsstangen 15 verbunden ist. Die Schwenkstellung des Pflugrahmens in bezug auf den Pflugträger erfolgt über eine weitere Kolben-Zylinder-Einheit 16. Diese Art der Verstellung bildet nicht den Gegenstand des vorliegenden Patents, so daß darauf nicht näher eingegangen zu werden braucht.

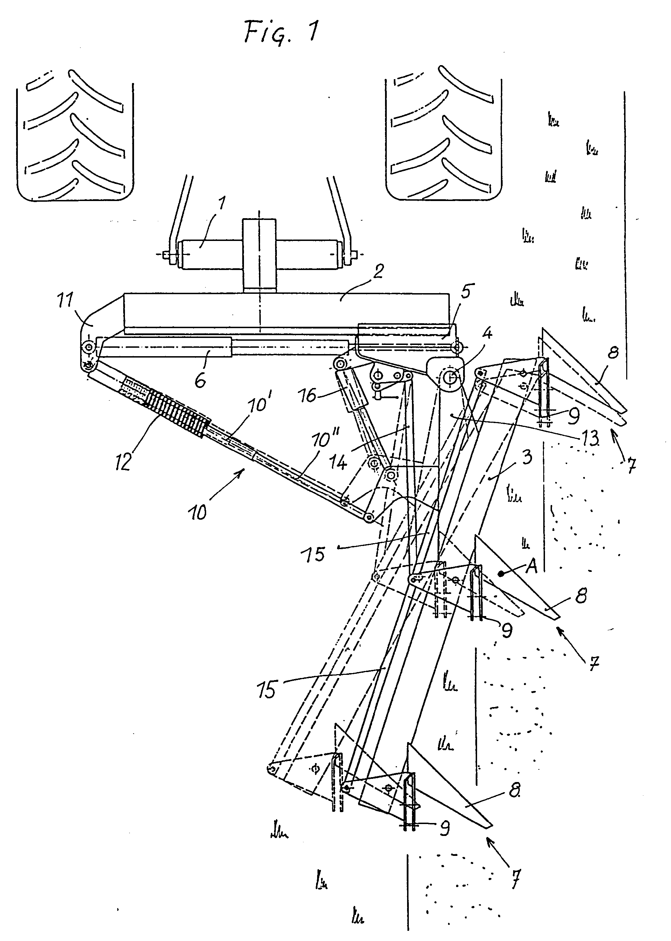

Befindet sich der Pflug in der in Fig. 1 wiedergegebenen, seitlich voll ausgefahrenen Stellung, dann liegt der ideelle Zugpunkt, welcher bei A angedeutet ist, im äußeren Randbereich der Spur des Ackerschleppers. Wenn der Pflug zur Vergrößerung der Arbeitsbreite etwas verschwenkt wird, und zwar vorliegend in die strichlierte Stellung, dann wandert der ideelle Zugpunkt A zwar etwas nach innen, jedoch werden die Zugkräfte aufgrund des größeren Arbeitspensums und der schrägeren Stellung der Pflugscharen höher, so daß hier gleichfalls wieder das bereits angeführte einseitige Einbringen des Zugmoments auf den Schlepper erfolgt. Das Zugorgan 10 verteilt nun die eingebrachten Zugkräfte auf beide Seiten des Schleppers, wodurch die durch das Verschwenken des Pflugrahmens in bezug auf den Pflugträger erfolgte Verkürzung des Zugorganes durch die Feder 12 derartig ausgeglichen wird, daß hier nahezu die gleichen Zugkräfte übertragen werden, wodurch auch bei einer solchen Stellung das geradlinige Ziehen des Pfluge, nicht beeinträchtigt wird.

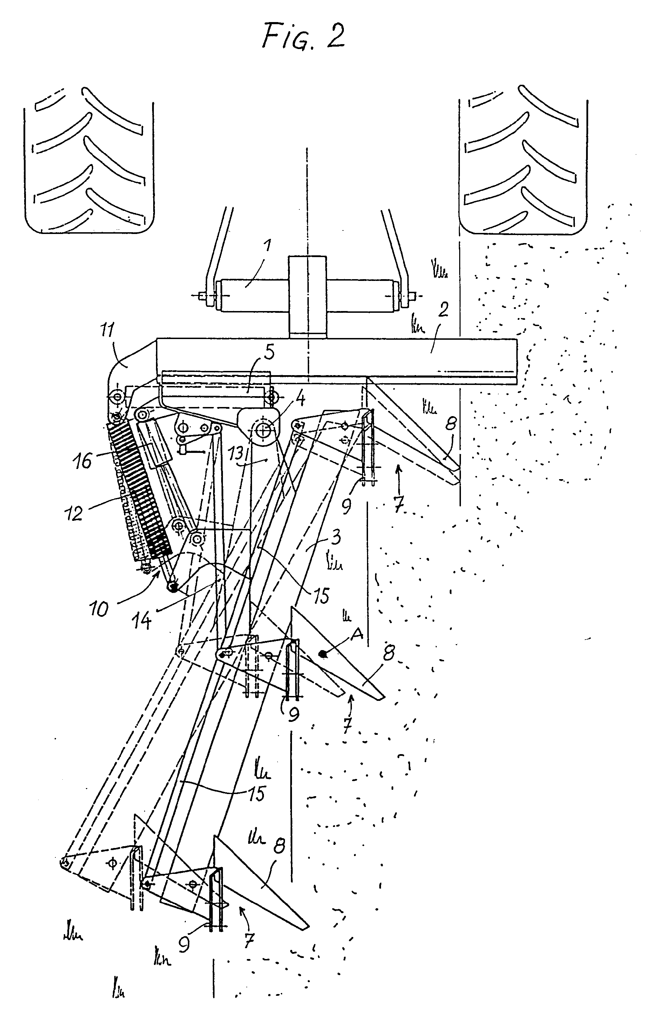

Bei der in Fig. 2 wiedergegebenen Stellung des Pfluges liegt der ideelle Zugpunkt A im Bereich der Mittellinie hinter dem Ackerschlepper, so daß ein im wesentlichen zentrales Einbringen der Zugkräfte auf den Ackerschlepper erfolgt. Die Zugstange 10 ist dabei in voll zusammengeschobenem Zustand und damit unwirksam, wobei die Feder 12 völlig entlastet ist. In dieser Lage des Pfluges ist ein Zugausgleich, welcher die Kräfte über die Breite des Ackerschleppers verteilt, nicht erforderlich.

## Patentansprüche

1. An einem Ackerschlepper anbaubarer, quer zur Fahrtrichtung parallel zur Bodenoberfläche verstellbarer Pflug, der einen Pflugrahmen (3) und einen relativ zum Ackerschlepper feststehenden Pflugträger (2) aufweist, bei welchem Pflug die Verbindung zwischen Pflugrahmen (3) und dem and der Koppel (1) befestigten, feststehenden Pflugträger (2) an einer quer zur Fahrtrichtung am Pflugträger (2) horizontal verschiebbaren Führung (5) angeordnet ist und sich in wenigstens einer Arbeitsstellung im Bereich der Spur hinter einem der Schlepperräder befindet, wobei ein äußerster Pflugkörper (7) außerhalb der Schlepperspur zu liegen kommt, dadurch gekennzeichnet, daß an dem der Verbindung (4) zwischen Pflugrahmen (3) und der am Pflugträger (2) horizontal verschiebbaren Führung (5) gegenüberliegenden Endbereich des an der Koppel (1) des Ackerschleppers angebrachten, feststehenden Pflugträgers (2) ein Zugorgan (10) angreift, das mit dem Pflugrahmen (3) hinter der Verbindung (4) desselben mit dem Pflugträger (2) angelenkt ist.

2. Pflug nach Anspruch 1, dadurch gekennzeichnet, daß das Zugorgan (10) teleskopartig verkürz- bzw. verlängerbar ist, wobei ein, bei seitlich voll versetztem Pflug das weitere Verlängern begrenzender, Anschlag vorgesehen ist.

3. Pflug nach Anspruch 2, dadurch gekennzeichnet, daß zwischen den zueinander teleskopartig verstellbaren Teilen (10', 10") des Zugorganes (10) eine sich beim Verlängern derselben spannende Feder (12) zwischengeschaltet ist.

## Claims

1. Plough which may be attached to a tractor and is adjustable transverse to the direction of movement parallel to the surface of the ground and which has a plough frame (3) and a plough carrier (2) which is fixed relative to the tractor, in which plough the connection between the plough frame (3) and the fixed plough carrier (2), which is secured to the coupler (1), is disposed on a guide which is horizontally slidable on the plough carrier (2) transverse to the direction of movement and is situated in at least one working position in the region of the track behind one of the tractor wheels, whereby an outermost plough body (7) is situated outside the tractor track, characterised in that engaging the fixed plough carrier, which is attached to the coupler (1) of the tractor, at the end region opposite to the connection (4) between the plough frame (3) and the guide (5), which is horizontally slidable on the plough carrier (2) there is a tension member (10) which is pivotally connected to the plough frame (3) behind the connection (4) of the same with the plough carrier (2).

2. Plough as claimed in claim 1, characterised in that the tension member (10) may be shortened or lengthened telescopically, whereby an abutment is provided which limits further lengthening when the plough is fully laterally offset.

3. Plough as claimed in claim 2, characterised in that interposed between the portions (10′,10˝) of the tension member (10) which are movable telescopically with respect to one another there is a spring (12) which stretches on lengthening of the same.

## Revendications

1. Charrue montée sur un tracteur, pouvant être réglée parallèlement a la surface du sol, et perpendiculairement au sens d'avancement, présentant un bâti de charrue (3) et un avant-train (2) fixe par rapport au tracteur, charrue dans laquelle la liaison entre le bâti (3) et l' avant-train fixe (2) monté sur la barre d'accouplement (1) est disposée sur un guidage (5) coulissant horizontalement sur l'avant-train (2) perpendiculairement au sens d'avancement et se trouve, au moins dans une position de travail, dans la zone de la voie derrière l'une des roues du tracteur, un corps de balourd (7) le plus extérieur venant se placer hors de la voie du tracteur, caractérisée en ce que, dans la zone d'extrémité de l'avant-train (2) fixe, monté sur la barre d'accouplement (1) du tracteur, opposée à la liaison (4) entre le bâti (3) et le guidage (5) coulissant horizontalement sur l'avant-train (2), se rattache un organe de traction (10) qui est articulé sur le bâti (3), à l'arrière de la liaison (4) de celui-ci, avec l'avant-train (2).

2. Charrue selon la revendication 1, caractérisée en ce que l'organe de traction (10) peut être télescopiquement raccourci ou allongé, une butée étant prévue pour limiter la poursuite de l'allongement lorsque la charrue est complètement décalée latéralement.

3. Charrue selon la revendication 2, caractérisée en ce que, entre les parties (10′ , 10"), réglables télescopiquement relativement entre elles, de l'organe de traction (10), est monté un ressort (12) qui se tend lorsque celui-ci s'allonge.
